# EUROPEAN PATENT SPECIFICATION

(11) **EP 3 097 806 B1**
(45) Date of publication and mention of the grant of the patent: **10.04.2019**
(21) Application number: 14835467.3
(22) Date of filing: 12.06.2014
(51) Int. Cl.: A42B 3/24, A42B 3/22

(54) **APPLIED SHEET AND HELMET**
AUFGEBRACHTE FOLIE UND HELM
FEUILLE APPLIQUÉE, ET CASQUE

(30) Priority: 23.01.2014 JP 2014010213
(43) Date of publication of application: 30.11.2016
(73) Proprietor: Wins Japan Co. Ltd., Kanazawa-shi, Ishikawa 921-8163 (JP)
(72) Inventor: KATAOKA Tadashi, Kanazawa-shi Ishikawa 921-8163 (JP)
(74) Representative: Goddar, Heinz J.
(86) International application number: PCT/JP2014/065642
(87) International publication number: WO 2015/111238

(56) References cited:
- JP-A- H10 510 596
- JP-A- 2010 518 270
- JP-A- 2010 540 787
- JP-A- 2011 063 929
- US-A- 5 671 483
- US-A1- 2006 010 572
- US-A1- 2010 175 160
- US-A1- 2011 283 431
- US-A1- 2012 102 628
- US-A1- 2012 102 628
- US-B1- 6 922 850

## Description

### TECHNICAL FIELD

The present invention relates to a pasting sheet and helmet.

### BACKGROUND OF THE INVENTION

For example, JP 2010-518270 A discloses a visor assembly which separates an overlay-sheet from the visor and includes a seal-member that forms a sealed partition between the visor and the overlay-sheet.

Further, JP 2010-540787 A discloses a method for forming a spacer or a seal that extending along the outer periphery of the visor's visual range, by mold injection of rapid coagulation property elastomeric resin.

US 2012/0102628 A1 discloses a system being constituted by a screen and a gasket with adhesive.

### SUMMARY OF THE INVENTION

It is an object of the present invention to provide a pasting sheet that can be pasted easily to the shield.

### DESCRIPTION OF THE RELATED ART

The pasting sheet according to the present invention is an affixed sheet which can be pasted on the shield to the helmet, and includes the sheet body that is light-transmitting, and the adhesive layer that is continuously arranged in the periphery of the sheet body, and a cross section of the adhesive layer has a convex curved surface.

Preferably, the adhesive layer is formed by coating the light transmission sheet with liquid elastic adhesive, in a projecting state so as to separate the pasting sheet from the shield by predetermined intervals.

Preferably, the adhesive layer which is disposed on the left end portion or right end portion of the light transmission sheet is wider than the adhesive layer which is disposed on the upper portion or lower portion of the light transmission sheet.

Preferably, the adhesive layer which is disposed on the left end portion or right end portion of the light transmission sheet is formed higher than the adhesive layer which is disposed on the upper portion or lower portion of the light transmission sheet.

Preferably, the pasting sheet comprises a suction disk, a suction disk fixed member for fixing the suction disk to the left end or the right end of the light transmission sheet; wherein the adhesive layer which is disposed on the left end portion or right end portion of the light transmission sheet has a height corresponding to the thickness of the fixed suction disk.

Preferably, the adhesive layer which is disposed on the left end portion or right end portion of the light transmission sheet includes a dot pattern adhesive layer at least and the adhesive layer which is disposed on the upper portion or lower portion of the light transmission sheet includes a liner or curve pattern adhesive layer at least.

Preferably, the light transmission sheet is made of cellulose acetate and the adhesive layer has a height for separating the shield from the light transmission sheet by a predetermined interval.

Preferably, the light transmission sheet has a shape for pasting the light transmission sheet on a concave surface of the shield and the adhesive layer which is disposed on the upper portion or lower portion of the light transmission sheet is becoming progressively lower from the central part to left or right part.

Preferably, the height of the adhesive layer which is disposed on the upper portion and lower portion of the light transmission sheet are different from each other on the central part.

Preferably, the pasting sheet comprises a left protrusion which protrudes in the left direction from the left end of the light transmission sheet; and a right protrusion which protrudes in the right direction from the right end of the light transmission sheet, wherein the suction disk fixed member is on the left or right protrusion and the left and right protrusion is bent at a portion outside the adhesive layer.

Preferably, the pasting sheet comprises an adhesive sheet of the planar shape without a substrate which is placed at the left end or right end portion of the light transmission sheet, wherein the adhesive sheet is thinner than the adhesive layer.

A helmet according to the present invention comprises a helmet body, a shield which is mounted on the helmet body and a pasting sheet which is pasted on a shield; wherein the pasting sheet has a light transmission sheet and an adhesive layer which is repeelable and readhesive and is continuously arranged in a periphery of the light transmission sheet, wherein a cross section of the adhesive layer is a convex curved surface.

### Effect of the Invention

The present invention can provide a pasting sheet that can be pasted easily to the shield.

### BRIEF DESCRIPTION OF THE DRAWINGS

FIG. 1 is a diagram illustrating the overall configuration of the helmet 1;
FIG. 2 is a diagram represents schematically a fixed position between the shield 9 and the pasting sheet 10 in the inside of the helmet 1;
FIG. 3 is a diagram illustrating a state before of the pasting of the pasting sheet;
FIG. 4 is a diagram represents schematically a fixed position (left edge area or right edge area) between the pasting sheet 10 and the shield 9;
FIG. 5 is a diagram represents schematically relationship of the adhesive surface, and the angle between the shield 9 and the pasting sheet 10, in a fixed position (left edge area or right edge area) between the pasting sheet 10 and the shield 9;
FIG. 6 is a diagram represents schematically role of the suction disk fixed member, the position relationship between the shield 9 and the pasting sheet 10 in the fixing position (upper region or lower region) between the pasting sheet 10 and the shield 9;
FIG. 7 is a flowchart of processing (S10) of the helmet;
FIG. 8 is a diagram showing the pasting sheet 10 in variation example 1;
FIG. 9 is a diagram showing the pasting sheet 10 in variation example 2;
FIG. 10 is a diagram showing the pasting sheet 10 in variation example 3;
FIG. 11 is a diagram showing the pasting sheet 10 in variation example 4.

### DESCRIPTION OF THE PREFERRED EMBODIMENTS

The following will describe an embodiment of the present invention with reference to the drawings.

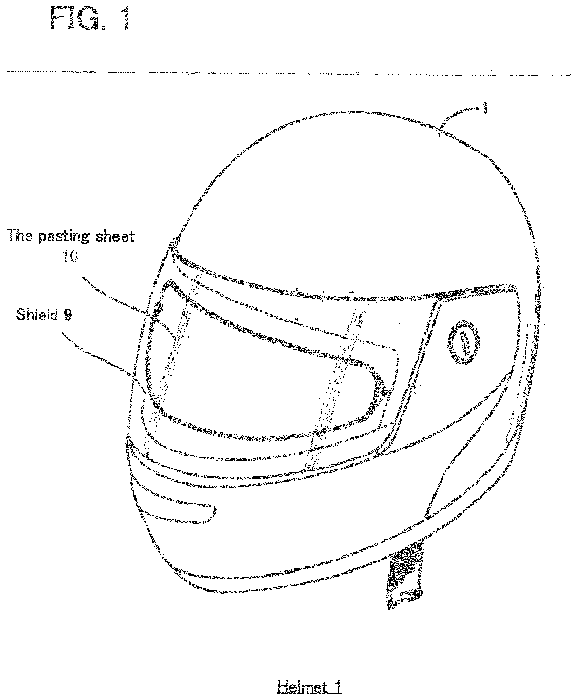

FIG. 1 is a diagram illustrating the overall configuration of the helmet 1;

As illustrated in FIG. 1, in the helmet 1, the shield 9 is provided, and the pasting sheet 10 is pasted to the shield 9 inside.

The shield 9 is composed of a transparent resin.

The pasting sheet 10 is inside of the shield 9, and disposed in a region including the view area of the wearer.

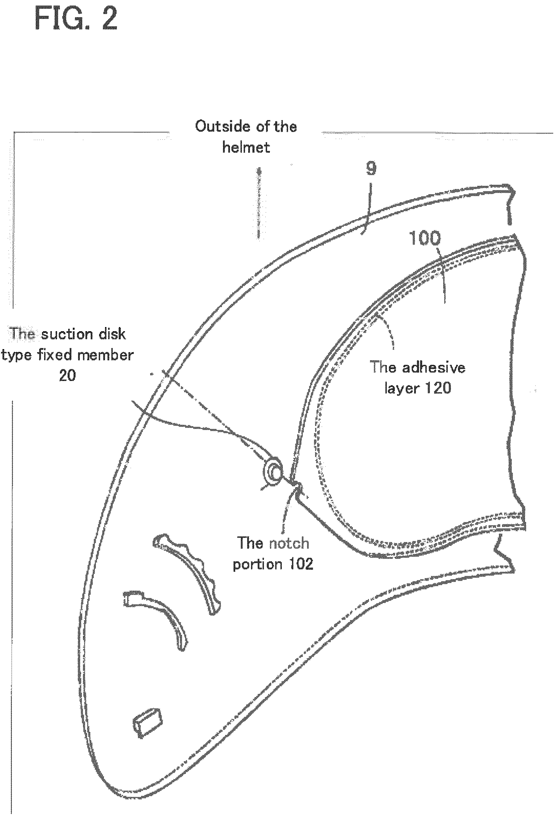

FIG. 2 is a diagram represents schematically a fixed position between the shield 9 and the pasting sheet 10 in the inside of the helmet 1.

As illustrated in FIG. 2, the suction disk fixed member 20 is attached to inside of the shield 9. The suction disk fixed member 20 is attached to inside of the shield 9 by the adsorption power of suction disk body.

Further, the pasting sheet 10 includes sheet body 100 and the adhesive layer 120.

The sheet body 100 is composed of the sheet-like resin that having translucency. For example, the sheet body 100 is a sheet having a condensation preventing function. Sheet body 100 of this example is a transparent sheet having a thickness of 0.1 to 1.0 mm made of cellulose acetate.

The notch portion 102 for engagement with the suction disk type fixed member 20 is provided at both ends of the sheet body 100.

The adhesive layer 120 is continuously arranged in the periphery of the sheet body 100. "Continuously arranged" referred to here, is not only the case as continuous to a linear or curved manner as this figure, means a concept including such broken lines. However, if you want to have air tightness in the space between the shield 9 and the pasting sheet 20, it is preferred that state of the adhesive layer 120 is a closed linear or curved manner. The "adhesive" in the present application means having adhesiveness, and is a concept that including those states with adhesiveness before solidification in addition to those by pure adhesive. In the present embodiment, never solidifies as adhesives, and will be described the adhesive by a specific example. The adhesive which is not solidified is detachably, and excellent in re-pasted.

Two suction disk type fixed member 20 is sucked and fixed to the left and right at the inside of the shield 9. The adhesive layer 120 is fixed to contact the inner surface of the shield 9, in a state that the pasting sheet 10 is sandwiched between above-suction disk type fixed members 20.

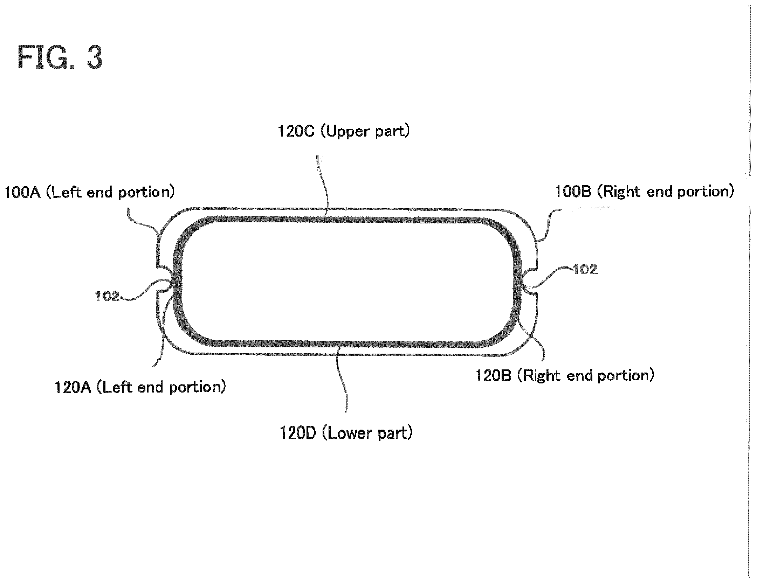

FIG. 3 is a diagram illustrating a state before of the pasting of the pasting sheet.

As illustrated in FIG. 3, the sheet body 100, the notch portion 102, and the adhesive layer 120 are symmetrical.

The adhesive layer 120, for example, is formed by drying with coating the liquid elastic adhesive to the peripheral portion of sheet body 100. That is the adhesive layer 120 has a tacky surface, and consists of an elastic adhesive can be elastic deformation with have a predetermined volume, and has a function as a spacer which can be elastic deformation and also has a function as a removable adhesive. Liquid-shaped elastic adhesive, for example, is a one-part moisture-reactive type elastic adhesive called Cemedine BBX909 of CEMEDINE CO., LTD. Furthermore, the adhesive layer 120 is also functioning as a sealing material for sealing the space between the sheet body 100 and the shield 9. Since sticky to the sealing material itself, a high sealing property can be expected.

Also, as illustrated in Fig. 3, the adhesive layer 120A and 120B that disposed on the sheet body 120's left end and the right end portion, has a wider width than the adhesive layer 120C or 120D that disposed at the upper or lower part of the sheet body 120. That is, the adhesive layer 120A and 120B that disposed on the sheet body 120's left end and right end portion, has a stronger adhesion than the adhesive layer 120C or 120D that disposed at the upper or lower part of the sheet body 120.

Notch portion 102 which is disposed on the left and right end of the sheet body 100 has a shape and size corresponding to the diameter of the suction disk protrusions section 210 of the suction disk type fixed member 20.

Notch portion 102 is an example of a suction disk fixing portion according to the present invention.

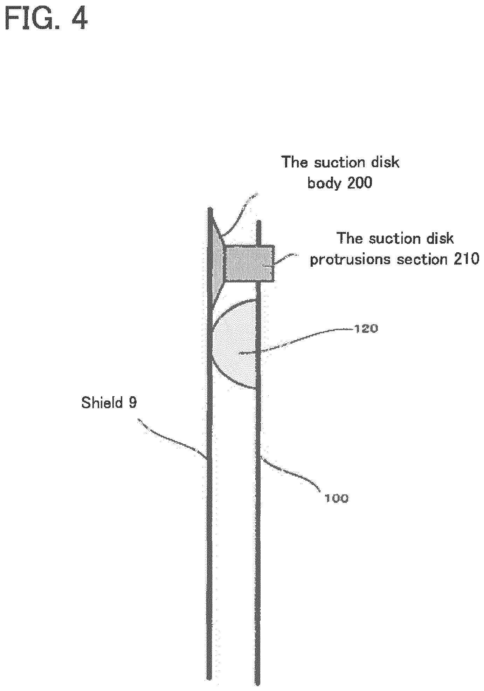

FIG. 4 is a diagram represents schematically a fixed position (left edge area or right edge area) between the pasting sheet 10 and the shield 9.

The suction disk type fixed member 20, is composed of the suction disk body 200 and the suction disk protrusions section 210 projecting from the suction disk body 200. As illustrated in Fig. 4, suction disk body 200 is adsorbed and fixed to the surface of the shield 9 in a state of being crushed elastically. Also, the suction disk protrusions section 210 engage to the notch portion 102 of the sheet body 100.

As illustrated in Fig. 4, the adhesive layer 120 is swelling to the extent that is spaced at a predetermined interval between the shield 9 and the sheet body 100. In this example, by the space between the shield 9 and the sheet body 100 is sealed by the adhesive layer 120, and to enhance the condensation prevention. Moreover, the sheet body 100 in the present example is desirable that in this way is separated, because it is composed of cellulose acetate that may react with chemical materials shield 9.

Moreover, the height of the adhesive layer 120A and 120B that disposed on the left end portion and right end portion is higher than the adhesive layer 120C or 120D that disposed on the upper or lower part. For example, the adhesive layer 120A and 120B of the left end portion and right end portion is formed to be higher than the thickness at the time of adsorption of the suction disk body 200. On the other hand, the adhesive layer 120A and 120B of the left end portion and right end portion has a height not exceeding the height of the suction disk type fixed member 20.

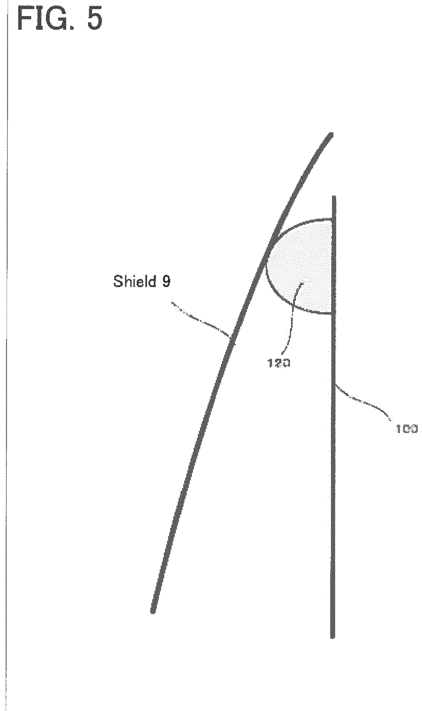

FIG. 5 is a diagram represents schematically relationship of the adhesive surface, and the angle between the shield 9 and the pasting sheet 10, in a fixed position (left edge area or right edge area) between the pasting sheet 10 and the shield 9.

As illustrated in Fig. 5, the adhesive layer 120 is swelling to have a convex surface cross-section. Since the inner surface of the shield 9 has a different surface shape, there is a case where the inner surface of the shield 9 is not parallel to the surface of the sheet body 100 as illustrated in Fig. 5. Even in such a case, by being formed of elastic adhesive having a cross-section of the raised convex surface, the adhesive layer 120 on the surface of the shield 9 can be widely adhere. In other words, a swollen convex curved surface of the adhesive layer 120 is pressed by the contact angle of the various, and is elastically deformed and forms a large contact surface, and can be adhesive to the inner of the shield 9 in this contact surface.

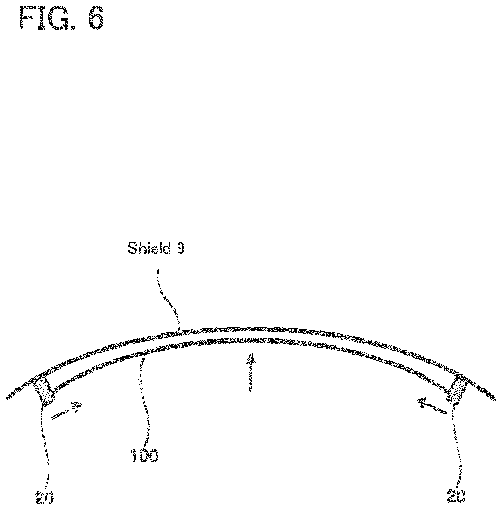

FIG. 6 is a diagram represents schematically role of the suction disk fixed member, the position relationship between the shield 9 and the pasting sheet 10 in the fixing position (upper region or lower region) between the pasting sheet 10 and the shield 9.

The pasting sheet 10 is a nearly planar shape in prior to application. As illustrated in Fig. 5, both ends of the pasting sheet 10 are elastically curved to the side of shield 9 by being sandwiched between two sucker type fixed members 20. The adhesive layer 120 (not shown) that continuous to the periphery of the entire the sheet body 100 by curved is possible to stick in contact with the overall shield 9.

Although the curved pasting sheet 10 is tries to restore by the elastic force after attaching, is fixed by the sucker type fixed member 20 and the adhesive strength of the widely provided adhesive layers 120A and 120B in the left end portion with the right end portion. Upon lapse of a predetermined time after application, the restoring force of the sheet body 100 is lowered, so can be expected to be fixed only by the adhesive strength of the adhesive layer 120A and 120B without a suction disk type fixed member 20.

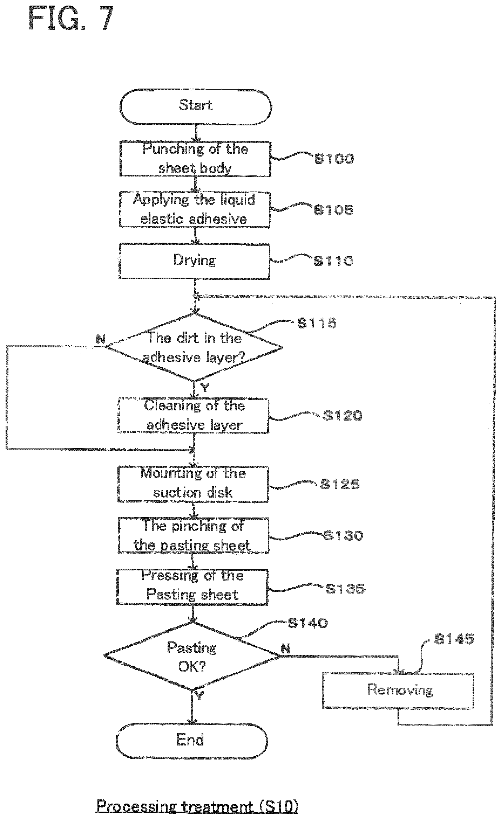

FIG. 7 is a flowchart of processing (S10) of the helmet.

As illustrated in Fig. 7, the processer to punch the sheet body 100 at pre-designed shape from a sheet of cellulose acetate, in the step 100 (S100).

A processing-person is applying a liquid elastic adhesive to the periphery of the sheet body 100 was punched, in the step 105 (S105). Application of the elastic adhesive, for example, a nozzle for discharging the adhesive is carried out by moving in a pre-programmed position and speed. This makes it possible to apply a liquid elastic adhesive to the desired shape and width and height.

In step 110 (S110), the adhesive layer 120 is formed on the sheet body 100 by drying the elastic adhesive which is applied to the sheet body 100. The dried adhesive layer 120 can be covered with a protective sheet such as a film for prevent the adhesion of dust.

In step 115 (S115), a processing-person confirm that the adhesive layer 120 isn't dirty. If the adhesive layer 120 is dirty, proceeds to the processing of S120; if the adhesive layer 120 is not dirty, proceeds to the processing of S125.

In step 120 (S120), a processing-person to wash the surface of the adhesive layer 120. The tackiness of the adhesive layer 120 surface is restored by remove the dirt such as dust by the wash with water.

In step 125 (S125), a processing-person arranges a suction disk type fixed member 20 at predetermined intervals on the inner surface of the shield 9 and is adsorbed. The position of a suction disk type fixed member 20 is appropriately adjusted according to the shape of shield 9 and the size of pasting sheet 10.

In step 130 (S130), the pasting sheet 10 is sandwiched between two suction disk type fixed members 20 which fixed to the inner face of the shield 9 by a processing-person. In this case, the notch portion 102 which is provided at both ends of the pasting sheet 10 abuts against the suction disk protrusions section 210 of the suction disk type fixed member 20.

In step 135 (S135), a processing-person presses the peripheral portion of the pasting sheet 10 to the direction of the shield 9, and to bringing the adhesive layer 120 into contact with the whole inner surface of the shield 9.

In the step 135 (S135), the processing-person check whether the adhesive layer 120 is adhered sufficiently in contact with the overall inner surface of the shield 9. If part of the adhesive layer 120 is not sufficiently contact with the inner surface of the shield 9, the processing-person proceeds to the process of S145; if the adhesive layer 120 is in contact overall, completes the processing S10.

Thus, the processing (S10) leverages the suction disk type fixed members 20 as a positioning member on the shield 9. While changing these positions subtly, a patch position of the pasting sheet 10 is determined. Thus, the processing-person can to paste the pasting sheet 10 to the shield 9 on the position tightly sealed with adhesive layer 120, without contaminating the sticking sheet 10 by repeated trial and error.

As described above, the helmet 1 of this embodiment can be separated away a pasting sheet 10 from the shield 9 by the adhesive layer 120, and is detachably fixed in sealed state. This makes it possible to add a condensation preventing function to the helmet. Particularly, since the adhesive layer 120 have a convex surface cross-section, can correspond to the shield of various shapes.

Further, the pasting sheet 10 of this embodiment is a manufacturing process is relatively simple, can be left some of the work (adjustment of the pasting position, pasting work, etc.) to the general user. Moreover, since the adhesive strength of the adhesive layer 120 can be restored to a certain extent by washing, maintenance can be easily performed.

### Variation example 1

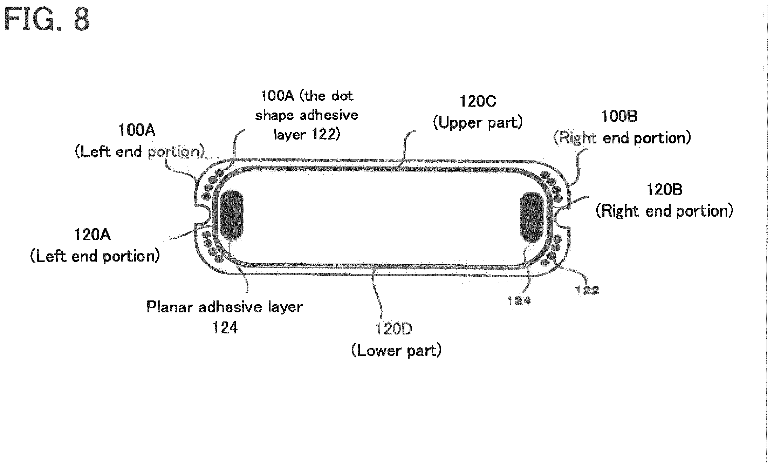

FIG. 8 is a diagram showing the pasting sheet 10 in variation example 1.

As illustrated in Fig. 8, the dot shape adhesive layer 122 may be disposed on the left end portion or right end portion of the sheet body 100.

By adding the dot shape adhesive layer 122, improvement of adhesion in the left and right ends of the adhesive sheet 10 can be expected.

Moreover, as illustrated in Fig. 8, sheet shape planar adhesive layer 124 may be provided on the inside of the adhesive layer 120 which functions as a sealing material. Planar adhesive layer 124 is double-sided tape which is possible adhesive on both sides, and both surfaces are substantially parallel. Planar adhesive layer 124 also functions as a spacer between the sheet body 100 and the shield 9, in addition to the reinforcement of the adhesive force at the left and right edge of the pasting sheet 10. For planar adhesive layer 124 both sides are substantially parallel, the distance between the shield 9 and the sheet body 100 can be substantially uniform, and can be expected to suppress the lens effect. The present modification has been described the provided embodiments for both the dot shape adhesive layer 122 and the planar adhesive layer 124. However, it is not limited thereto, and may be provided with either one of these only.

### Variation example 2

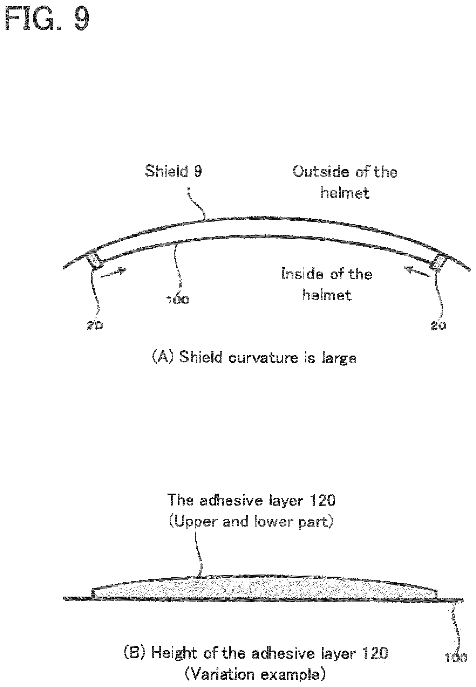

FIG. 9 is a diagram showing the pasting sheet 10 in variation example 2.

As illustrated in Fig. 9, the height of the upper and lower adhesive layer 120 of the sheet body 100 can be changed according to the position in a right and left direction.

For example, as illustrated in Fig. 9(A), the spacing between the shield 9 and the sheet body 100 is not constant when the curvature of the shield is large. In such the case, as illustrated in Fig. 9(B), the height of the adhesive layer 120 of the central portion in the lateral direction of the sheet body 100 to be higher than the adhesive layer 120 at the left end and right end. Hence, during the shield 9 and the sheet body 100 is successfully sealed by the adhesive layer 120.

As the present example, the embodiment the height (swollen) of the adhesive layer 120 is lowered as close to the left edge and right edge is also suitable in the case as the distance close between the helmet body and the shield 9 that is when opening or closing shield 9.

Moreover, the distance between the helmet body and the shield 9 at the time of opening and closing the shield, has a tendency that the left end and right end portion of the shield 9 is close than the center portion. As in this modification, the pasting sheet 10 at the time of opening and closing the shield, can be avoid contact with the helmet body by lowering the adhesive layer 120 at the left end and right end portion.

### Variation example 3

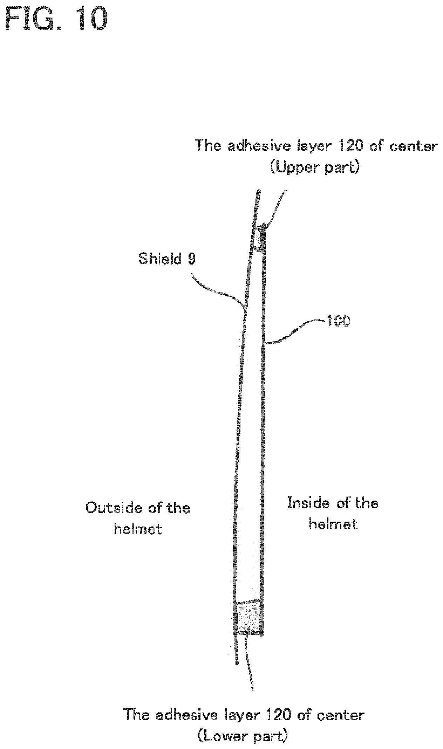

FIG. 10 is a diagram showing the pasting sheet 10 in variation example 3.

Sheet body 100 which is curved in lateral direction when it is pasted to the shield 9, cannot be bent in the vertical direction, are substantially straight as illustrated in Fig. 10. Moreover, fixing force of the adhesive sheet 10 is designed to be stronger left end and the right end than the central portion. Therefore, as illustrated in Fig. 10, sheet body 100, may not be able to follow the vertical direction shape of the inner surface of the shield 9.

In such a case, the heights of the upper adhesive layer 120 and a lower adhesive layer 120 may be different. In this example, the height of the lower adhesive layer 120 is higher than the upper adhesive layer 120. The height adjustment of the adhesive layer 120 can be adjusted by the coating amount of the liquid elastic adhesive. In addition to the height of the adhesive layer 120, the width of the adhesive layer 120 becomes wider by increasing the coating amount of the elastic adhesive. Thus, increases the volume in the adhesive layer 120 made of an elastic body, the shape follow-up due to elastic deformation can be expected to improve.

Moreover, the distance between the helmet body and the shield 9 at the time of opening and closing the shield, has a tendency that the upper portion of the shield 9 is close than the lower portion. As in this modification, the pasting sheet 10 at the time of opening and closing the shield, can be avoid contact with the helmet body by lowering the adhesive layer 120 at the upper and lower portion.

### Variation example 4

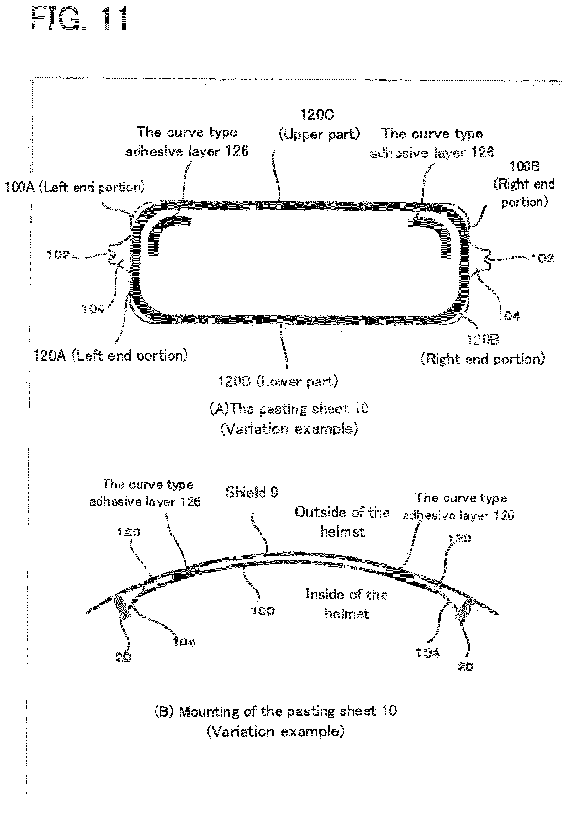

FIG. 11 is a diagram showing the pasting sheet 10 in variation example 4.

As illustrated in Fig. 11, may be configured to protrude the notch portion 102 from left end and right end portion of the sheet body 100.

For example, the sheet body 100 is formed into a sheet using cellulose acetate, cellulose triacetate, cellulose propionate, or cellulose acetate propionate. From the point of the distortion that occurred by the sheet body 100 of excessive moisture absorption, the sheet body 100 is composed of cellulose propionate or cellulose acetate propionate. The thickness of the sheet body 100 is preferably 0.5-0.8mm and more preferably 0.7-0.8mm. From the viewpoint of moisture absorption capacity, cellulose acetate is preferred over cellulose propionate or cellulose acetate propionate. In order to suppress the distortion, the thickness of the sheet body 100 of cellulose acetate is preferably in the 0.6-0. 8mm. When the sheet body 100 is composed of cellulose triacetate, it is preferable that the thickness of the sheet body 100 is 0.5-0.8mm.

Moreover, as illustrated in Fig. 11(A), the protrusion 104 of the left side that protrudes the left direction substantially from the center of the left end portion 100A by the sheet body 100 is provided. The protrusion 104 of the right side that protrudes almost right direction from the center of the right end portion 100B by the sheet body 100 is provided. The notch portion 102 is provided in the most protruding end of the protrusion 104. The protrusion 104 is formed as that the width in accordance to toward the end from the sheet body 100 is gradually thinner. Furthermore, the corners are formed into round shape at the end of the protrusions 104.

Moreover, as illustrated in Fig. 11(B), the protrusion 104 is bent at the boundary between the sheet body 100 and the protrusion 104, in the outside of the adhesive layer 120, at the surface which is opposite to the surface are disposed in the adhesive layer 120.

As the size of the protrusion 104 of this modification, for example, the length to the most protruding end from the boundary between the sheet body 100 and the protrusion 104 (the bent position) is 0.8-1. 2cm, the length of the most protruding end width of the protrusion 104 is 0.5-0.9cm. The length of the boundary between the sheet body 100 and the protrusion 104 (the bent position) is 2.0-2.4cm. That is, the length of the boundary between the sheet body 100 and the protrusion 104 is 1.8-2.0 times the length of the length of the most protruding.

Moreover, as illustrated in Fig. 11(A), the sheet body 100, is continuous to the upper left corner from the center portion of the left end portion of the sheet body 100 at inner of adhesive layer 120, and can be provided the curve type adhesive layer 126 at the left side. Also, the sheet body 100, is continuous to the upper right corner from the center portion of the right end portion of the sheet body 100 at inner of adhesive layer 120, and can be provided the curve type adhesive layer 126 at the right side. These curve type adhesive layer 126 is an adhesive sheet of the planar shape without a substrate that placed at the left end or right end portion of the sheet body 100. The thickness of the curve type adhesive layer 126 is preferably thinner than the adhesive layer 120. The curve type adhesive layer 126 of the present embodiment is formed by combined sheet to the peripheral shape of the adhesive layer 120, can be provided separately the release paper from the adhesive layer 120. The curve type adhesive layer 126 is thicker than the adhesive layer 120, has an adhesive surface of substantially parallel, reinforces the adhesive force of the left and right ends. The curve type adhesive layer 126 is disposed at 0.5-1.0cm away position from the adhesive layer 120 .

By the pasting sheet 10 provides the protrusion 104 to the left end and right end of the sheet body 100, and bends the protruding portion 104 at outside of the adhesive layer 120, the distance between the notch portion 102 and the inner region that the adhesive layer120 is provided, can be increased. Furthermore, as illustrated in Fig. 11(A), the distortion of the left and right direction by the height of the suction disk type fixed members 20 is less likely to be propagated with respect to the inner provided with the adhesive layer 120. Because the distortion of the left and right direction by the height of the suction disk type fixed members 20 is less likely to be propagated with respect to the inner provided with the adhesive layer 120, the sheet body 100 can easily follow the vertical direction shape of the shield 9.

Moreover, there is no necessity to increase the height of the left end and right end portion of the sheet body 100, by the sheet body 100 to increase the distance between the notch portion 102 and the adhesive layer 120 of the right end and the left end portion. Therefore, it is possible to reduce the amount of adhesive to be used in the adhesive layer 120A and 120B provided on the left end and right end of the sheet body 100.

Moreover, the pasting sheet 10 can be provided a region provided with the adhesive layer 120 until the verge of the periphery of the sheet body 100, by protruding the notch portion 102 from the right end and the left end portion of the sheet body 100. Therefore, it can be ensured large space provided with the adhesive layer 120, and can be arranged without dividing the curve type adhesive layer 126.

### Descriptions of symbols

1. Helmet
9. Shield
10. The pasting sheet
102. The notch portion
120. The adhesive layer
20. The suction disk type fixed member

## Claims

1. A pasting sheet (10) for being pasted on a shield (9) of a helmet (1) comprising;
a light transmission sheet (100); and
an adhesive layer (120) continuously arranged in a periphery of the light transmission sheet (100),
**characterized in that**
a cross section of the adhesive layer (120) is a convex curved surface.

2. The pasting sheet according to claim 1, wherein the adhesive layer is formed by coating the light transmission sheet with liquid elastic adhesive, in a projecting state so as to separate the pasting sheet from the shield by predetermined intervals.

3. The pasting sheet according to claim 2, wherein the adhesive layer (120A, 120B) which is disposed on the left end portion (100A) or right end portion (100A) of the light transmission sheet is wider than the adhesive layer (120C, 120D) which is disposed on the upper portion or lower portion of the light transmission sheet.

4. The pasting sheet according to claim 3, wherein the adhesive layer (120A, 120B) which is disposed on the left end portion or right end portion of the light transmission sheet is formed higher than the adhesive layer (120C, 120D) which is disposed on the upper portion or lower portion of the light transmission sheet.

5. The pasting sheet according to claim 4, further comprising;
a suction disk (200) ; and
a suction disk fixed member (102) for fixing the suction disk to the left end or the right end of the light transmission sheet,
wherein the adhesive layer which is disposed on the left end portion or right end portion of the light transmission sheet has a height corresponding to the thickness of the fixed suction disk.

6. The pasting sheet according to claim 5, wherein the adhesive layer which is disposed on the left end portion or right end portion of the light transmission sheet includes a dot pattern adhesive layer (122) at least and the adhesive layer which is disposed on the upper portion or lower portion of the light transmission sheet includes a liner or curve pattern adhesive layer (120C, 120D) at least.

7. The pasting sheet according to claim 1, wherein the light transmission sheet is made of cellulose acetate and the adhesive layer (120) has a height for separating the shield from the light transmission sheet by a predetermined interval.

8. The pasting sheet according to claim 7, wherein the light transmission sheet has a shape for pasting the light transmission sheet on a concave surface of the shield and the adhesive layer which is disposed on the upper portion or lower portion of the light transmission sheet is becoming progressively lower from the central part to left or right part.

9. The pasting sheet according to claim 1, wherein the height of the adhesive layer which is disposed on the upper portion and lower portion of the light transmission sheet are different from each other on the central part.

10. The pasting sheet according to claim 5, further comprising;
a left protrusion (104) which protrudes in the left direction from the left end of the light transmission sheet; and
a right protrusion (104) which protrudes in the right direction from the right end of the light transmission sheet, wherein the suction disk fixed member is on the left or right protrusion and the left and right protrusion is bent at a portion outside the adhesive layer.

11. The pasting sheet according to claim 1, further comprising an adhesive sheet (126) of the planar shape without a substrate which is placed at the left end or right end portion of the light transmission sheet, wherein the adhesive sheet (126) is thinner than the adhesive layer (120).

12. A helmet comprising;
a helmet body (1);
a shield (9) which is mounted on the helmet body; and
the pasting sheet (10) according to any one of claims 1 to 11 which is pasted on the shield (9) and is repeelable and readhesive.

## Patentansprüche

1. Klebefolie (10) zum Aufkleben auf ein Visier (9) eines Helms (1), umfassend:
eine lichtdurchlässige Folie (100); und
eine Klebeschicht (120), die durchgehend in einer Peripherie der lichtdurchlässigen Folie (100) angeordnet ist,
**dadurch gekennzeichnet, dass**
ein Querschnitt der Klebeschicht (120) eine konvex gekrümmte Fläche ist.

2. Klebefolie nach Anspruch 1, wobei die Klebeschicht gebildet wird durch Beschichten der lichtdurchlässigen Folie mit flüssigem elastischem Klebstoff, in einem vorragenden Zustand, um so die Klebefolie vom Visier durch vorgegebene Intervalle zu trennen.

3. Klebefolie nach Anspruch 2, wobei die Klebeschicht (120A, 120B), die auf dem linken Endteil (100A) oder rechten Endteil (100A) der lichtdurchlässigen Folie angeordnet ist, breiter als die Klebeschicht (120C, 120D) ist, die auf dem oberen Teil oder unteren Teil der lichtdurchlässigen Folie angeordnet ist.

4. Klebefolie nach Anspruch 3, wobei die Klebeschicht (120A, 120B), die sich auf dem linken Endteil oder rechten Endteil der lichtdurchlässigen Folie befindet, höher ausgebildet ist, als die Klebeschicht (120C, 120D), die auf dem oberen Teil oder unteren Teil der lichtdurchlässigen Folie angeordnet ist.

5. Klebefolie nach Anspruch 4, ferner umfassend:
eine Saugscheibe (200); und
ein saugscheiben-befestigtes Element (102) zum Befestigen der Saugscheibe am linken Ende oder dem rechten Ende der lichtdurchlässigen Folie, wobei die Klebeschicht, die auf dem linken Endteil oder dem rechten Endteil der lichtdurchlässigen Folie angeordnet ist, eine Höhe hat, die der Dicke der befestigten Saugscheibe entspricht.

6. Klebefolie nach Anspruch 5, wobei die Klebeschicht, die auf dem linken Endteil oder dem rechten Endteil der lichtdurchlässigen Folie angeordnet ist, mindestens eine punkt-gemusterte Klebeschicht (122) enthält, und die Klebeschicht, die auf dem oberen Teil oder dem unteren Teil der lichtdurchlässigen Folie angeordnet ist, enthält mindestens eine linien- oder kurven-gemusterte Klebeschicht (120C, 120D).

7. Klebefolie nach Anspruch 1, wobei die lichtdurchlässige Folie aus Zelluloseazetat hergestellt ist, und die Klebeschicht (120) hat eine Höhe zum Trennen des Visiers von der lichtdurchlässigen Folie durch ein vorgegebenes Intervall.

8. Klebefolie nach Anspruch 7, wobei die lichtdurchlässige Folie eine Form zum Kleben der lichtdurchlässigen Folie auf eine konkave Fläche des Visiers hat, und die Klebeschicht, die auf dem oberen Teil oder dem unteren Teil der lichtdurchlässigen Folie angeordnet ist, wird vom zentralen Teil zum linken oder rechten Teil zunehmend niedriger.

9. Klebefolie nach Anspruch 1, wobei die Höhe der Klebeschicht, die auf dem oberen Teil und dem unteren Teil der lichtdurchlässigen Folie angeordnet ist, im mittleren Teil unterschiedlich voneinander ist.

10. Klebefolie nach Anspruch 5, ferner umfassend:
einen linken Vorsprung (104), der in der linken Richtung vom linken Ende der lichtdurchlässigen Folie vorragt; und
einen rechten Vorsprung (104), der in der rechten Richtung vom rechten Ende der lichtdurchlässigen Folie vorragt, wobei das saugscheiben-befestigte Element auf dem linken oder rechten Vorsprung liegt, und der linke und rechte Vorsprung ist an einem Teil außerhalb der Klebeschicht gebogen.

11. Klebefolie nach Anspruch 1, die ferner eine Klebstofffolie (126) von ebener Form ohne ein Substrat umfasst, die am linken End- oder rechten Endteil der lichtdurchlässigen Folie angebracht ist, wobei die Klebstofffolie (126) dünner als die Klebefolie (120) ist.

12. Helm, umfassend:
einen Helmkörper (1);
ein Visier (9), das am Helmkörper befestigt ist; und
die Klebefolie (10) nach einem der Ansprüche 1 bis 11, die auf das Visier (9) aufgeklebt ist und abziehbar und wiederhaftend ist.

## Revendications

1. Feuille de collage (10) destinée à être collée sur un blindage (9) d'un casque (1) comprenant;
une feuille de transmission de lumière (100); et
une couche adhésive (120) agencée de manière continue dans une périphérie de la feuille de transmission de lumière (100),
**caractérisée en ce que**
la section transversale de la couche adhésive (120) présente une surface incurvée convexe.

2. Feuille de collage selon la revendication 1, dans laquelle la couche adhésive est formée par revêtement de la feuille de transmission de lumière avec un adhésif élastique liquide à l'état soulevé, de manière à séparer la feuille de collage dudit blindage à intervalles prédéterminés.

3. Feuille de collage selon la revendication 2, dans laquelle la couche adhésive (120A, 120B) qui est disposée sur la partie d'extrémité gauche (100A) ou sur la partie d'extrémité droite (100A) de la feuille de transmission de lumière est plus large que la couche adhésive (120C, 120D) qui est disposée sur la partie supérieure ou sur la partie inférieure de la couche de transmission de lumière.

4. Feuille de collage selon la revendication 3, dans laquelle la couche adhésive (120A, 120B) qui est disposée sur la partie d'extrémité gauche ou sur la partie d'extrémité droite de la feuille de transmission de lumière est formée de manière plus élevée que la couche adhésive (120C, 120D) qui est disposée sur la partie supérieure ou sur la partie inférieure de la couche de transmission de lumière.

5. Feuille de collage selon la revendication 4, comprenant en outre;
un disque d'aspiration (200); et
un élément fixe de disque d'aspiration (102) destiné à attacher le disque d'aspiration sur l'extrémité gauche ou sur l'extrémité droite de la feuille de transmission de lumière,
dans laquelle la couche adhésive qui est disposée sur la partie d'extrémité gauche ou sur la partie d'extrémité droite de la feuille de transmission de lumière a une hauteur correspondant à l'épaisseur du disque d'aspiration fixé.

6. Feuille de collage selon la revendication 5, dans laquelle la couche adhésive qui est déposée sur la partie d'extrémité gauche ou sur la partie d'extrémité droite de la feuille de transmission de lumière comprend au moins une couche adhésive à motif de points (122), et la couche adhésive qui est disposée sur la partie supérieure ou sur la partie inférieure de la feuille de transmission de lumière comprend au moins une couche adhésive de forme linéaire ou courbe (120C, 120D).

7. Feuille de collage selon la revendication 1, dans laquelle la feuille de transmission de lumière est constituée d'acétate de cellulose, et la couche adhésive (120) possède une hauteur destinée à séparer le blindage de ladite feuille de transmission de lumière par un intervalle prédéterminé.

8. Feuille de collage selon la revendication 7, dans laquelle la feuille de transmission de lumière présente une forme destinée à étre collée sur une surface concave du blindage, et la hauteur de la couche adhésive qui est disposée sur la partie supérieure ou sur la partie inférieure de la feuille de transmission de lumière diminue progressivement depuis la partie centrale vers la partie gauche ou la partie droite.

9. Feuille de collage selon la revendication 1, dans laquelle la hauteur de la couche adhésive qui est disposée sur la partie supérieure et sur la partie inférieure de la feuille de transmission de lumière est différente l'une de l'autre sur la partie centrale.

10. Feuille de collage selon la revendication 5, comprenant en outre;
une protubérance gauche (104) qui fait saillie dans la direction gauche à partir de l'extrémité gauche de la feuille de transmission de lumière; et
une protubérance droite (104) qui fait saillie dans la direction droite à partir de l'extrémité droite de la feuille de transmission de lumière,
dans laquelle l'élément fixe de disque d'aspiration se trouve sur la protubérance gauche ou sur la protubérance droite, et la protubérance gauche et la protubérance droite sont courbées au niveau d'une partie située à l'extérieur de la couche adhésive.

11. Feuille de collage selon la revendication 1, comprenant en outre une feuille adhésive (126) de forme planaire sans substrat, celle-ci étant placée au niveau de la partie d'extrémité gauche ou de la partie d'extrémité droite de la feuille de transmission de lumière,
dans laquelle la feuille adhésive (126) est plus fine que la couche adhésive (120).

12. Casque comprenant;
un corps de casque (1);
un blindage (9) qui est monté sur le corps de casque;
et
la feuille de collage (10) selon l'une quelconque des revendications 1 à 11, ladite feuille étant collée sur le blindage (9) et étant en mesure d'être pelée et à nouveau scellée.
